(19) Europäisches Patentamt
European Patent Office
Office européen des brevets

(11) Publication number: **0 128 983**
**A1**

(12) # EUROPEAN PATENT APPLICATION

(21) Application number: 83303571.0

(22) Date of filing: 21.06.83

(51) Int. Cl.³: C 07 C 69/63
C 07 C 69/65, A 01 N 37/04
A 01 N 37/10

(43) Date of publication of application:
27.12.84 Bulletin 84/52

(84) Designated Contracting States:
DE FR GB

(71) Applicant: MERCK & CO. INC.
126, East Lincoln Avenue P.O. Box 2000
Rahway New Jersey 07065(US)

(72) Inventor: Engelhart, John E.
701 Dartmoor
Westfield New Jersey 07090(US)

(72) Inventor: Angeles, Marshall R.
2265 Elizabeth Avenue
Scotch Plains New Jersey(US)

(72) Inventor: D'Errico, Michael J.
3018 Herald Crescent
Flossmoor Illinois 60422(US)

(74) Representative: Crampton, Keith John Allen et al,
D YOUNG & CO 10 Staple Inn
London WC1V 7RD(GB)

(54) **2,3-Dihalo-2,3-(di-substituted)propanoate antimicrobial compounds.**

(57) Compounds of the formula:

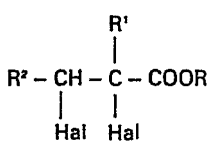

(I)

in which Hal is bromine or chlorine; R is $C_{1-4}$ alkyl and one of $R^1$ and $R^2$ is hydrogen and the other is $C_{3-8}$ cycloalkyl; ($C_{3-8}$ cycloalkyl)-($C_{1-3}$ alkyl); phenyl; phenyl-($C_{1-3}$ alkyl); mono- or di-substituted phenyl or phenyl-($C_{1-3}$ alkyl) in which the substituent(s) is/are halo, $C_{1-4}$ alkyl, $C_{1-4}$ alkoxy, hydroxy, nitro, cyano, or trifluoromethyl; thienyl, furanyl, pyrrolyl, isoxazolyl, oxazolyl, isothiazolyl, thiazolyl, pyrazolyl, imidazolyl, pyridazinyl, pyrimidinyl, pyrazinyl, or pyridinyl, or an N-oxide thereof; pyrrolidinyl, tetrahydrofuranyl, tetrahydrothienyl, isoxazolidinyl, tetrahydrofuranyl, tetrahydrothienyl, isoxazolidinyl, oxazolidinyl, isothiazolidinyl, thiazolidinyl, pyrazolidinyl, imidazolidinyl, piperazinyl or piperidinyl, are antimicrobial and are made into suitable antimicrobial compositions and used for inhibiting the growth of microbes such as bacteria, fungi and algae, especially in the water used in pulp and paper mills.

EP 0 128 983 A1

Croydon Printing Company Ltd

# 2,3-DIHALO-2,3-(DI-SUBSTITUTED)PROPANOATE ANTIMICROBIAL COMPOUNDS

The present invention is concerned with antimicrobial compounds and compositions containing them as active ingredients for the inhibition of the growth of bacteria, yeast, fungi, and algae. These novel antimicrobial compounds of the present invention have a number of important industrial and agricultural applications.

As used herein, the term "antimicrobial" describes the killing of, as well as the inhibition of or control of the growth of bacteria, yeasts, fungi, and algae. A number of important industries can experience serious adverse effects from the activity of such bacteria and fungi on the raw materials that they use, on various aspects of their manufacturing activities, or on the finished products which they produce. Such industries include the paint, wood, textile, cosmetic, leather, tobacco, fur, rope, paper, pulp, plastics, fuel, oil, rubber and machine industries. Important applications include: inhibiting the growth of bacteria in aqueous paints, adhesives, latex emulsions, and joint cements; preserving wood; preserving cutting oils; controlling slime-producing bacteria and fungi in pulp and paper mills and cooling towers; as a spray or dip treatment for textiles and leather to prevent mold growth; as a component of anti-fouling paints to prevent adherence of fouling organisms; as a hard surface disinfectant to prevent growth of bacteria and fungi on walls and floors; and in swimming pools to prevent algae. The control of bacteria and fungi in pulp and paper mill water systems which contain aqueous dispersions of papermaking fibres is especially important. The uncontrolled build-up of slime produced by the accumulation of bacteria and fungi causes off-grade production, decreased production due to breaks and greater clean-up frequency, increased raw material usage, and increased maintenance costs. The problem of slime deposits has been aggravated by the widespread use of closed white water systems in the paper industry.

Antimicrobial compounds are also utilized for agricultural applications, for example in preventing or minimizing the growth of harmful bacterial, yeast, and/or fungi on plants, trees, fruit, seeds or soil.

A particular application for which the antimicrobial compounds of the present invention have been found especially useful is in the protection of paint films from attack by fungi. Paint film fungicides which can preserve paint films from the deleterious effects of fungal attack which occur during weathering of the paint film have long been sought. Few, however, have been found due to the stringent requirements for such a successful paint film fungicide. Moreover, the ability to provide in-can preservative activity, as well as paint film protection, is also desirable. However, this additional characteristic is seldom seen in a paint film fungicide.

Matt U.S. Patent No. 3,608,084 describes halogenated aliphatic nitriles for controlling the growth of aerobacter bacteria in industrial water systems.

Grier, et al, U.S. Patent Nos. 3,833,731 and 3,877,922; and Harmetz, et al, U.S. Patent No. 3,873,597 describe 2-bromo-2-bromoethylglutaronitrile and related compounds and their use as antibacterial, antifungal, and algicidal agents.

Gershon, et al, in J. Med. Chem. 20 (4), 606-9 (1977), describe the antifungal properties of 2-bromo-3-fluorosuccinic acid esters.

Rader et al, British Patent Specification No. 1,424,943 describes α-(halomethyl)mandelonitrile microbiocides.

Tanaka, et al, Japan, Kokai 75,123,828 (9-29-75), Chem. Ab. 84:39698t, disclose ethyl 2,3-dibromopropionate as an intermediate for preparing dithiolane herbicides and fungicides.

Motoyama, et al, Sankyo Kenkyusho Nempo 23:233-44 (1971), Chem. Ab. 77:30239s, disclose 2,3-dichloropropionic acid as a herbicide.

However, there is no suggestion in any of the above references of the particular compounds of the present invention or their broad spectrum of antimicrobial activity.

In accordance with the present invention there are provided novel 2,3-dihalo-2,3-(di-substituted)propanoates of the formula:

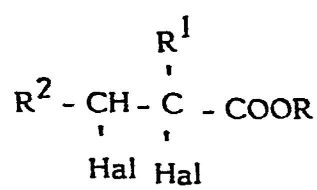

(I)

where Hal is bromine or chlorine; R is $C_{1-4}$ alkyl; and one of $R^1$ and $R^2$ is hydrogen and the other is $-(CH_2)_nCOOR$, where R is $C_{1-4}$ alkyl and n is 0, 1, 2, 3, 4, 5, or 6; $C_{1-12}$ alkyl; $C_{3-8}$ cycloalkyl; ($C_{3-8}$ cycloalkyl)-($C_{1-3}$ alkyl); phenyl; phenyl-($C_{1-3}$ alkyl); mono- or di-substituted phenyl or phenyl-($C_{1-3}$ alkyl) where the substituent(s) is/are halo, $C_{1-4}$ alkyl, $C_{1-4}$ alkoxy, hydroxy, nitro, cyano, or trifluoromethyl; thienyl, furanyl, pyrrolyl, isoxazolyl, oxazolyl, isothiazolyl, thiazolyl, pyrazolyl, imidazolyl, pyridazinyl, pyrimidinyl, pyrazinyl or pyridinyl, or an N-oxide thereof; pyrrolidinyl, tetrahydrofuranyl, tetrahydrothienyl, isoxazolidinyl, oxazolidinyl, isothiazolidinyl, thiazolidinyl, pyrazolidinyl, imidazolidinyl, piperazinyl, or piperidinyl. The alkyl groups mentioned may be straight or branched.

Particularly preferred compounds of the present invention are ethyl 1,2-dibromo-3-phenylpropanoate; 2,3-dibromo-butanedioic acid bisethyl ester and 2-bromo-2-bromomethyl-butanedioic acid bismethyl ester.

In accordance with the present invention there is further provided an antimicrobial composition comprising a carrier and an antimicrobially effective amount of a compound of the formula I above.

The 2,3-dihalo-2,3-(di-substituted)-propanoate active ingredient of the antimicrobial composition of the present invention may be used in diverse formulations: solid, including finely divided powders and granular materials; liquid, such as solutions, emulsions, suspensions, concentrates, emulsifiable concentrates and slurries, depending upon the application intended and the formulation medium desired. Further, when the 2,3-dihalo-2,3-(di-substituted)propanoate is liquid, it may be used neat or may be incorporated into various formulations, both solid and liquid, as an adsorbate on suitable inert carriers such as talc, clays and diatomaceous earth.

Thus, it will be appreciated that the 2,3-dihalo-2,3-(di-substituted)-propanoate of the invention may be used to form antimicrobial formulations containing such compounds as the essential active ingredient, which formulations may also contain a variety of carrier materials adaptable to industrial and agricultural applications including finely divided dry or liquid diluents, extenders, clays, diatomaceous earth and talc, or water and various organic liquids such as lower (e.g. $C_{1-6}$) alkanols, kerosene, benzene, toluene and other petroleum distillate fractions or mixtures of them.

It will be understood also that the 2,3-dihalo-2,3-(di-substituted)-propanoate active ingredients may be used in association with one another as well as with other antimicrobial materials. For example, these compounds can be associated with other fungicides and bactericides such as 2-(4'-thiazolyl)benzimidazole, sorbic acid, propionic acid, mycostatin, sodium diacetate, trichomycin, amphotericin, griseofulvin, undecylenic acid, esters of parahydroxybenzoic acid, chlorguinaldol, 5,7-dichloro-8-hydroxyquinoline, sodium o-phenylphenate, o-phenylphenol, biphenyl chlorinated phenols and sodium benzoate in appropriate concentrations and in appropriate instances so as to combine the action of each to obtain particularly useful results. Such mixtures might find particular application in the preparation of germicidal soaps, in the production of cosmetics and aqueous coatings and in combating paper-mill-slime accumulations. The 2,3-dihalo-2,3-(di-substituted)propanoates can be combined with other aligicidal agents such as benzalkonium chlorides and other quaternary ammonium compounds to obtain formulations particularly suitable to special problems of algae control.

In accordance with the present invention there is further provided a method of inhibiting the growth of at least one of bacteria, yeast, fungi, and algae, comprising contacting the bacteria, yeast, fungi, or algae, with a bactericidally, fungicidally, or algicidally effective amount of a compound of the formula I above.

As noted above, the invention is based upon the discovery that 2,3-dihalo-2,3-(di-substituted)propanoates of Formula I are effective in controlling the growth of bacteria, yeast, fungi and algae in a variety of industrial and agricultural applications. It has been found, for example, that compounds of Formula I are effective antimicrobials for the destruction or control of soil fungi and bacteria and for the protection of seeds, bulbs and plants. Also, they are effective algicides in the treatment of pools, ponds and cooling water systems. The utility of the 2,3-dihalo-2,3-(di-substituted)propanoates of this invention is shown by their activity, not only against bacteria and fungi responsible for stunting the growth of and even the destruction of many types of crop-producing plants, but also against bacteria causing degradation and deterioration of many types of industrial products including, for example, paper, leather, textiles, aqueous systems such as adhesives, resins, drilling fluids, pigment dispersions and latex

paints, and oleoresinous coatings whose films are particularly vulnerable to the destructive action of fungi. The large economic losses encountered in paper-making operations caused by the accumulation of bacterial and fungal slimes in various parts of the system can be eliminated to a significant extent by use of the compounds of Formula I.

Thus, for pulp and paper mill systems, there is provided a method of inhibiting the growth of slime-forming bacteria, fungi, and algae, usually encountered in pulp and paper mill systems, comprising incorporating into the mass of fibre and water in such a pulp and paper mill system so as to contact the bacteria, fungi, and algae and at least a bactericidally, fungicidally, and algicidally effective amount of a compound of the Formula I above.

The antimicrobial activity of the compounds described above has been confirmed using standard laboratory techniques. They have been found effective, for example, in inhibiting bacteria including Aerobacter-sp. such as A.-aerogenes, Pseudomonas sp. such as P. aeruginosa. They have been found effective also against fungi including Aspergillus sp. such as A. niger, Pullularia sp. such as P. pullulans, Penicillium sp. such as P. funiculosum, Alternaria sp. such as A. brassicicola, and Saccharomyces sp. such as S. cerevisiae. Such bacteria and/or fungi commonly are found on cereal and grain products, on oils, on fruits and vegetables and on cosmetics, leather, electrical insulation, textiles and numerous other materials capable of supporting their growth. Also, such bacteria and/or fungi may be found on plants, seeds, fur and wood and in soils. Further, they may be used to control overgrowth of algae such as Chlorella sp. including C. pyrenoidosa.

As noted above, it has been found that growth of various harmful fungi and bacteria existing in soil is eliminated or limited by use of formulations containing the 2,3-dihalo-2,3-(di-substituted)propanoates described herein. The term soil as used here is intended to include all media capable of supporting growth of plants and may include humus, sand, manure, compost and artifically created plant growth solutions.

2,3-dihalo-2,3-(di-substituted)propanoates of Formula I have activity against bacteria, yeast, fungi, and algae when used at appropriate levels of concentration and may be used to inhibit growth of these organisms. The required effective concentration will vary with particular organisms and in particular applications. In general, however, effective fungicidal,

bactericidal and algicidal response is obtained when the concentration of the 2,3-dihalo-2,3-(di-substituted)propanoate ranges between 0.5 and 5000 ppm (parts per million) by weight.

For latex paints, latex emulsions and adhesives, from 100 to 2000 ppm by weight of a compound of the present invention is added during manufacture of the paint, emulsion, or adhesive in order to protect the system during in-can storage against bacteria, fungi, and yeasts.

For cooling towers from 1 to 100 ppm, and for pulp and paper-mills from 50 to 500 ppm, of a compound of the present invention is added to the pulp suspension in a paper mill or to the recirculating cooling water in a cooling tower in order to inhibit the growth of slime-forming bacteria, fungi, yeasts and algae.

For metal-working fluids, i.e. cutting oils, from 200 to 2000 ppm of a compound of the present is added to a metal working fluid concentrate in order to inhibit the growth of bacteria, fungi, and yeasts during the use cycle of an oil-water lubricant for metal surfaces.

For other applications of the type described above, from 0.005 to 0.5% by weight, based on weight of the substrate being treated, of a compound of the present invention, is incorporated into, sprayed onto, used to dip, or otherwise applied to the substrate to be treated in order to prevent growth of bacteria, fungi, yeasts and algae.

The 2,3-dihalo-2,3-(di-substituted)propanoates of the present invention may be prepared in accordance with the syntheses described below.

A. Compounds of Formula I where $R^1$ is hydrogen and $R^2$ is a selected substituent other than $-(CH_2)_n$ COOR:

$$R^2\text{-CH=CH-COOR} + Br_2 \xrightarrow{CHCl_3} \text{R-}\underset{\text{Br}}{\text{CH}}\text{-}\underset{\text{Br}}{\text{CH}}\text{-COOR}$$

The starting materials for this route are unsaturated carboxylic acids which are readily available or which may be prepared in accordance with well known techniques. For example, where $R^2$ is phenyl, cinnamic acid is used. Before bromination, the acid is converted to the desired ester by well

known techniques. Also, ester starting materials are readily available in many cases.

B. Compounds of Formula I where $R^1$ is hydrogen and $R^2$ is $-(CH_2)_nCOOR$:

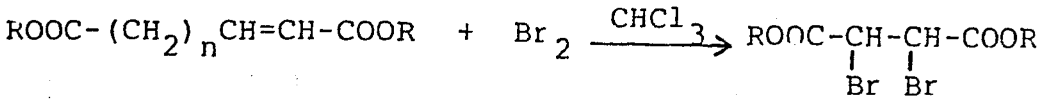


The starting materials for this route are unsaturated dicarboxylic acids which are readily available or which may be prepared in accordance with well known techniques. For example, diethyl fumarate may be used. Before bromination, the desired diester is prepared or a diester starting material is used.

C. Compounds of Formula I where $R^2$ is hydrogen and $R^1$ is a selected substituent other than $-(CH_2)_n$ COOR:

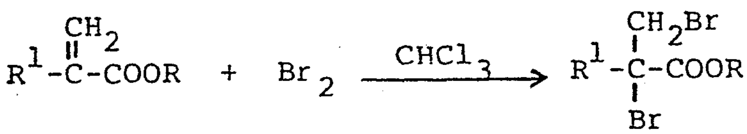


The starting materials for this route are carboxylic acids having a methylene group attached to the α-carbon. The starting materials, where $R^1$ is attached through a methylene bridge, in turn, may be prepared in accordance with a series of reactions illustrated as follows:

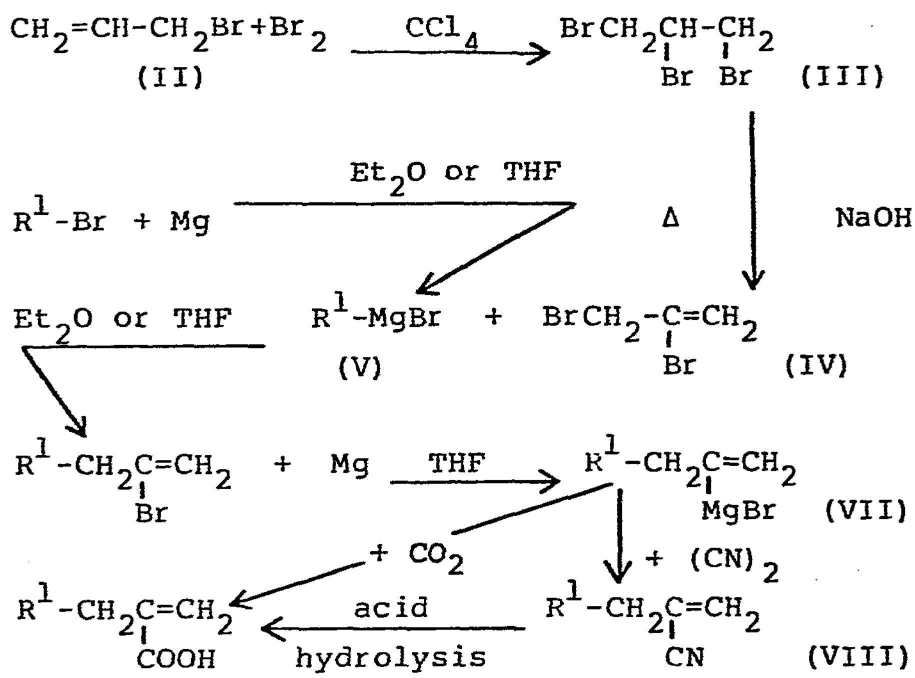


(II) (III) (V) (IV) (VII) (VIII)

In the first two steps shown above, the intermediate 2,3-dihalo-1-propene (IV) is prepared from the available starting material 3-halo-1-propene (II) by halogenation, followed by selective dehydrohalogenation.

(1) The allyl bromide or chloride starting material is treated with bromine or chlorine either neat or in a chlorinated hydrocarbon solvent such as carbon tetrachloride, chloroform, or dichloromethane. The reaction is exothermic and cooling is used to maintain the reaction temperature at about room temperature. The solvent is then removed and the liquid residue is carried forward to the next step.

(2) In the second step, dehydrobromination or dehydrochlorination is carried out using a strong base such as sodium hydroxide or potassium hydroxide. Water, the salt of the base, and the product are formed in the reaction, and the reaction is carried out with vigorous boiling, which results in spontaneous distillation of the product with the water, thus driving the reaction to completion.

(3) The third step involves preparation of the Grignard reagent in accordance with well known techniques.

(4) The reaction of the Grignard reagent with the propene product of the second step is exothermic, and the temperature of the reaction mixture must be kept below 15 °C in order to avoid self-coupling of the Grignard reagent and promote cross-coupling with the propene. This result can also be facilitated by the use of a catalyst such as copper (I) chloride. The solvent employed may be any inert, aprotic solvent such as diethyl ether, tetrahydrofuran, or diglyme. When the reaction is complete, the solvent is removed, and the product is then separated and dissolved in a solvent for use in the next step.

(5) In the fifth step, the substituted propene from the preceding step is slowly added to magnesium turnings with vigorous stirring in order to promote solubilization of the Grignard product formed on the surface of the magnesium. The reaction is exothermic, and the reaction mixture is kept at the reflux temperature of the solvent, which is tetrahydrofuran, diethyl ether, or diglyme. The time required for completion of the reaction depends upon the reaction temperature and upon the surface area of the magnesium, i.e., magnesium of finer mesh size will result in a faster reaction. When the reaction is complete, the reaction mixture is carried over for use in the next step without further treatment.

(6) In the sixth step cyanogenation is accomplished by reverse addition of the Grignard product of the preceding step to a saturated solution of cyanogen. It has been found that cyanogen chloride and cyanogen bromide are unacceptable reactants because they result in insignificant yields of product. Reverse addition is required in order to avoid an excess of the Grignard reactant, which can react with the product. The solvent medium in which the reaction is carried out is tetrahydrofuran, diethyl ether, or diglyme. The reaction is mildly exothermic, and the reaction mixture temperature is maintained at from -20 ° to +20 ° C in order to ensure the solubility of the cyanogen. The product is separated and carried forward to the last step.

(7) In the last step, the cyano group is converted to a carboxyl group by acid hydrolysis in accordance with well-known procedures.

Where $R^1$ is attached directly, the starting materials may be prepared in accordance with a series of reactions which may be illustrated as follows:

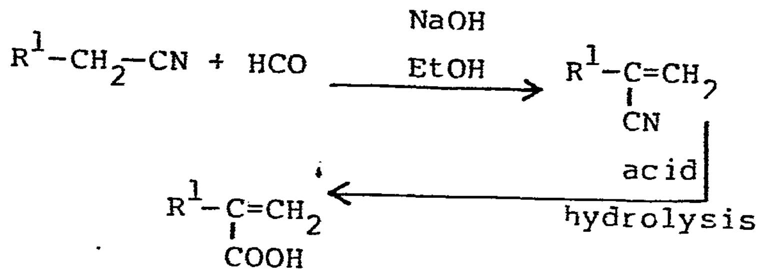


D. Compounds of Formula I where $R^2$ is hydrogen and $R^1$ is $-(CH_2)_nCOOR$;

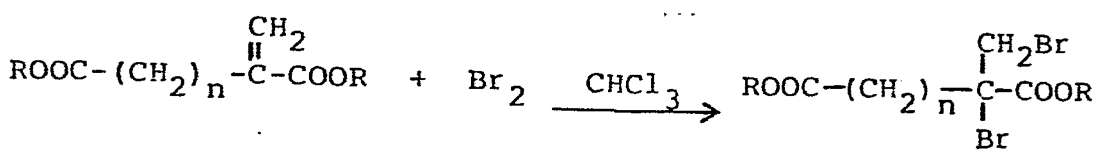


The starting materials for this route are dicarboxylic acids having a methylene group attached to the α-carbon. For example, where n is 1, itaconic acid may be used. The dimethyl ester may be used as the starting material. If the starting materials are not available, they may be prepared in accordance with the series of reactions described above in C.

The following examples illustrate but do not limit the present invention.

## EXAMPLE 1

Preparation of Ethyl 2,3-dibromo-3-phenylpropanoate

A 250 ml 3-necked round bottomed flask equipped with a magnetic stirrer, water-cooled reflux condenser, thermometer, and bromine addition funnel was charged with ethyl cinnamate (17.6 g, 0.10 mol) and 100 ml of dry chloroform. To this solution there was added 16.0 g (0.10 mol) of bromine over a 3-hour period, and the reaction mixture was stirred for an additional 20 hours. After removing the solvent, 33.5 g (99% of theory) of a crystalline product was obtained, m.p. 70°-72°C. $^1H$ NMR ($CDCl_3$, $(CH_3)_4Si$), δ7.0 (s, 5H), δ5.0-5.2 (d, J=12Hz, 1H); δ4.5-4.7 (d, J=12Hz, 1H); δ3.8-4.2 (q, J=7Hz, 2H); δ0.9-1.2 (t, 3H).

Elemental Analysis: Calculated for $C_{11}H_{12}O_2Br_2$:

| | | | |
|---|---|---|---|
| Calc'd: | C, 39.32%; | H, 3.60%; | Br, 47.56%; |
| Found: | C, 40.16%; | H, 3.62%; | Br, 47.58%. |

## EXAMPLES 2-3

Following the procedures described above in Example 1, and substituting the appropriate starting materials, there were prepared the compounds described in the following Table:

| Example No. | Starting Material | Product |
|---|---|---|
| 2 | EtOOC-CH=CH-COOEt | 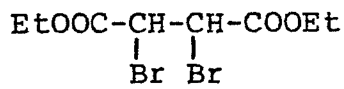 |
| 3 | 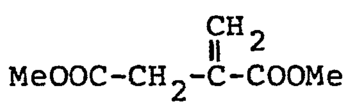 | 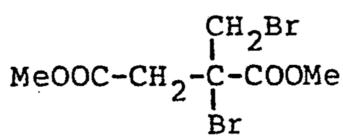 |

## EXAMPLES 4-6

In order to determine antimicrobial spectrum, the following techniques are employed:

Antibacterial Activity -- A stock solution of the sample to be tested is prepared in 25% methanol. Dilutions of the stock solution are made into Tryptone Glucose Extract Agar (Difco) and the agar is poured into sterile petri dishes. After hardening, the plates are streaked with an aqueous suspension of the test organism. The inoculated plates are incubated at 35-37° C and examined after twenty-four hours for the presence or absence of growth. The lowest concentration at which no growth occurred is reported as the "Inhibiting Concentration".

Antifungal Activity -- A stock solution of the sample to be tested is prepared in 25% methanol. Dilutions of the stock solution are made into Sabouraud Maltose Agar (Difco) and the agar is poured into sterile petri dishes. After hardening, the plates are streaked with an aqueous spore suspension of the test organism. No wetting agent is used in preparation of

the suspension. The inoculated plates are incubated at 28-30°C and examined after seven days for the presence or absence of growth. The lowest concentration at which no growth occurred, is reported as the "Inhibiting Concentration".

Employing the techniques described above, various of the 1,2-dibromo-2-cyano-2-(aryl)ethanes-(propanes) of the present invention were tested at 10, 50, 100, 200, 400, 750 and 1000 ppm against the organisms, and with the results, indicated in the following table:

TABLE I

| 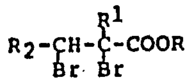 | | | | MINIMUM INHIBITORY CONCENTRATIONS (PPM) | | | | | | |
|---|---|---|---|---|---|---|---|---|---|---|
| Exp. No. | R | $R^1$ | $R^2$ | Aerobacter aerogenes | Pseudomonas aeruginosa | Aspergillus niger | Saccharomyces cerevisiae | Pullularia pullulans | Penicillium funiculosum | Alternaria brassicicola |
| 4 | Et | H | EtOOC- | 400 | 200/400 | 100 | 50 | 50 | 200 | 50 |
| 5 | Me | $MeOOC-CH_2-$ | H | 10 | 10 | 200 | 10 | 50 | 50 | 50 |
| 6 | Et | H | 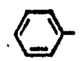 | >1000 | >1000 | 10 | 10 | 100 | 200 | 50 |

## CLAIMS

1 A compound of the formula:

$$\begin{array}{ccccc} & & R^1 & & \\ & & | & & \\ R^2 - & CH & - C & - COOR & \\ & | & | & & \\ & Hal & Hal & & \end{array} \qquad (I)$$

in which Hal is bromine or chlorine; R is $C_{1-4}$ alkyl and one of $R^1$ and $R^2$ is hydrogen and the other is $C_{3-8}$ cycloalkyl; ($C_{3-8}$ cycloalkyl)-($C_{1-3}$ alkyl); phenyl; phenyl-($C_{1-3}$ alkyl); mono- or di-substituted phenyl or phenyl-($C_{1-3}$ alkyl) in which the substituent(s) is/are halo, $C_{1-4}$ alkyl, $C_{1-4}$ alkoxy, hydroxy, nitro, cyano, or trifluoromethyl; thienyl, furanyl, pyrrolyl, isoxazolyl, oxazolyl, isothiazolyl, thiazolyl, pyrazolyl, imidazolyl, pyridazinyl, pyrimidinyl, pyrazinyl, or pyridinyl, or an N-oxide thereof; pyrrolidinyl, tetrahydrofuranyl, tetrahydrothienyl, isoxazolidinyl, oxazolidinyl, isothiazolidinyl, thiazolidinyl, pyrazolidinyl, imidazolidinyl, piperazinyl or piperidinyl.

2 An antimicrobial composition comprising a carrier and an antimicrobially effective amount of a compound of the formula (I) set forth in claim 1.

3 A method of inhibiting the growth of bacteria, fungi, and/or algae, comprising contacting the bacteria, fungi and/or algae, with a bactericidally, fungicidally, or algicidally effective amount of a compound of the formula (I) set forth in claim 1.

4 A method of inhibiting the growth of slime-forming bacteria, fungi, and algae usually encountered in pulp and paper mill systems, comprising incorporating into the mass of fibre and water in such a pulp and paper mill system so as to contact the bacteria, fungi, and algae, at least a bactericidally, fungicidally, and algicidally effective amount of a compound of the formula (I) set forth in claim 1.

European Patent Office

# EUROPEAN SEARCH REPORT

0128983
Application number

EP 83 30 3571

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-2 224 248 (H. HOWELL et al.) * Pages 20,21, claims 1a,6 * --- | 1 | C 07 C 69/63<br>C 07 C 69/65<br>A 01 N 37/04<br>A 01 N 37/10 |
| X | COLLECTION OF CZECHOSLOVAK CHEMICAL COMMUNICATIONS, vol. 41, 1976, pages 617-622, Academie Prague, CS. V. JANOUT et al.: "Reaction of 1,2-dihalides with thiolates" * Page 618, table 1 * ----- | 1 | |
| | | | TECHNICAL FIELDS SEARCHED (Int. Cl. 3) |
| | | | C 07 C 69/00 |

The present search report has been drawn up for all claims

| Place of search | Date of completion of the search | Examiner |
|---|---|---|
| THE HAGUE | 23-02-1984 | KINZINGER J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82